# EUROPEAN PATENT APPLICATION

(11) **EP 2 174 864 A1**
(43) Date of publication of application: **14.04.2010**
(21) Application number: 08165997.1
(22) Date of filing: 07.10.2008
(51) Int. Cl.: B62M 3/08

(54) **Coupling assembly between treadle and crank of bicycle**

(71) Applicant: VP Components Co., Ltd., Taiwan (TW)
(72) Inventor: Lin, Wen-Hwa, 438, Waipu (TW)
(74) Representative: Viering, Jentschura & Partner

(57) **Abstract**

A coupling assembly is provided between a treadle (30) and a crank (50) of a bicycle and comprises a connecting nut (60) for being assembled to a threaded hole (52) of the crank (50) with a threaded segment (61) thereof, and a treadle shaft (40) combined with the treadle for being assembled to a threaded hole (62) of the connecting nut (60) with a threaded segment thereof.

## Description

### BACKGROUND OF THE INVENTION

### 1. Technical Field

The present invention relates to a coupling assembly between a treadle and a crank of a bicycle. The coupling assembly has a compact and simplified structure and is convenient to be assembled and disassembled so as to benefit bicycle manufacturers by reducing assembling time and allow a bicycle user to replace treadles by himself/herself easily.

### 2. Description of Related Art

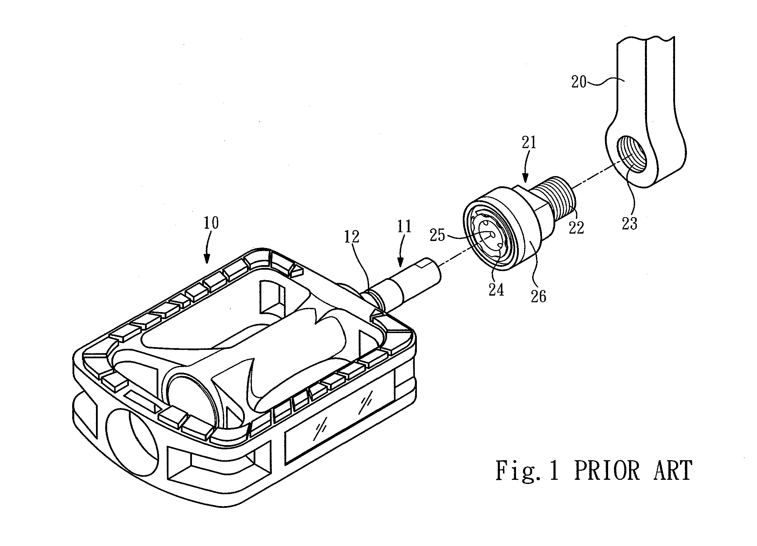

A known approach for coupling a treadle with a crank of a bicycle, as can be seen in Figure **1****,** comprises a treadle shaft **11** combined with the treadle **10** and a connector **21** combined with the crank **20.** The treadle **10** is allowed to revolve on the treadle shaft **11** freely and the connector **21** has one end provided with a threaded segment **22** for being coupled with a threaded hole **23** formed on the crank **20.** The connector **21** has an opposite end formed with a hole **24** for receiving the treadle shaft **11,** wherein a wall defining the hole **24** is provided with a plurality of balls that are annularly arranged. The balls are controlled by a controlling ring **26** attached to an exterior of the connector **21** to move toward or away an axis of the connector **21.** When moving toward the axis of the connector **21,** each said ball **25** partially projects from the hole **24** and gets coupled with a corresponding ball recess **12** formed on the treadle shaft **11,** so that the treadle shaft **11** is combined with the connector **21.** When moving away the axis of the connector **21,** each said ball **25** no more exposes in the hole **24** and leaves the corresponding ball recess **12,** so that the treadle shaft **11** is free from the combination with the connector **21.**

The conventional connector **21** composed of tiny springs, recesses, rings and other positioning elements is structurally complicated and difficult to be assembled. Nevertheless, a defective connector **21** can significantly increase time consumption of bicycle assembling process and raise failure rate of bicycle assembling process. Besides, once the treadle is coupled with the crank, the coupling problem between the controlling ring **26** and the balls **25** can render the treadle shaft **11** jammed in the connector **21** and the treadle **10** can be no more disassembled from the crank **20.** In such a case, a bicycle user has no way to replace the treadle by himself/herself and it is inescapable to replace the connector **21** together with the treadle.

### SUMMARY OF THE INVENTION

The primary objective of the present invention is to provide a coupling assembly between a treadle and a crank of a bicycle, which coupling assembly has a compact structure and is convenient to be assembled and disassembled so as to benefit bicycle manufacturers by reducing assembling time and allow a bicycle user to replace treadles by himself/herself easily.

To achieve this and other objectives of the present invention, the disclosed coupling assembly comprises a connecting nut for being assembled to a threaded hole of a crank with a threaded segment thereof, and a treadle shaft combined with the treadle for being assembled to a threaded hole of the connecting nut with a threaded segment thereof.

### BRIEF DESCRIPTION OF THE DRAWINGS

The invention as well as a preferred mode of use, further objectives and advantages thereof, will best be understood by reference to the following detailed description of an illustrative embodiment when read in conjunction with the accompanying drawings, wherein:
Figure **1** illustrates a conventional approach for coupling a treadle and a crank;
Figure **2** is an exploded view of a coupling assembly of the present invention showing a treadle shaft of a treadle, a crank and a connecting nut therebetween;
Figure **3** is a further exploded view of the coupling assembly of the present invention;
Figure **4** is a perspective view of the treadle assembled to the crank through the coupling assemble of the present invention; and
Figure **5** is a cross-sectional of the treadle assembled to the crank through the coupling assemble of the present invention; and

### DETAILED DESCRIPTION OF THE PREFERRED EMBODIMENTS

While a preferred embodiment is provided herein for illustrating the concept of the present invention as described above, it is to be understood that the components in these drawings are made for better explanation and need not to be made in scale. Moreover, in the following description, resemble components are indicated by the same numerals.

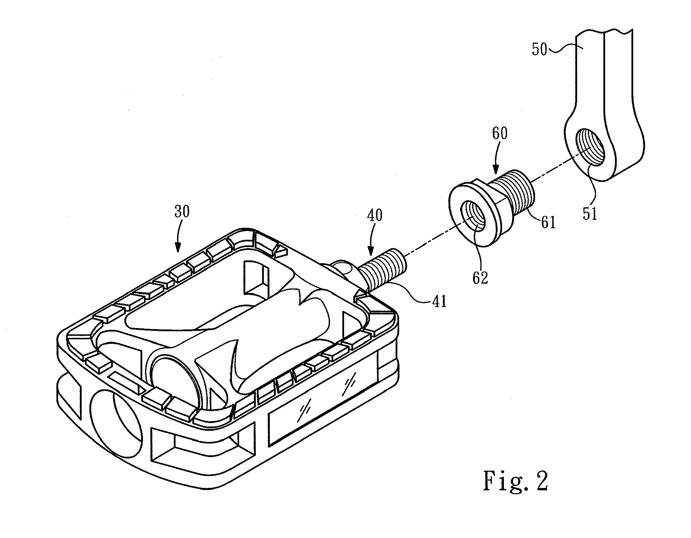

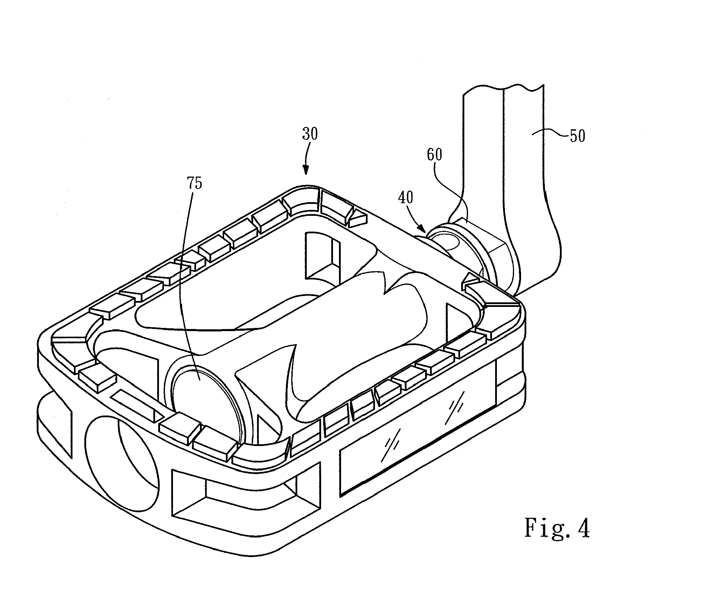

Referring to Figures **2****,** **4** and **5****,** a coupling assembly between a treadle **30** and a crank **50** of a bicycle comprises a treadle shaft **40** combined with the treadle **30** and a connecting nut **60** combined with the crank **50.** The connecting nut **60** has one end thereof formed with a threaded segment **61** for being coupled with a threaded hole **51** of the crank **50.** The connecting nut **60** further has a threaded hole **62** axially passing though two end thereof. The treadle shaft **40** has a part projecting from the treadle **30** formed as a first threaded segment **41** for being coupled with the threaded hole **62** of the connecting nut **60** so as to combine the treadle **30** with the crank **50.**

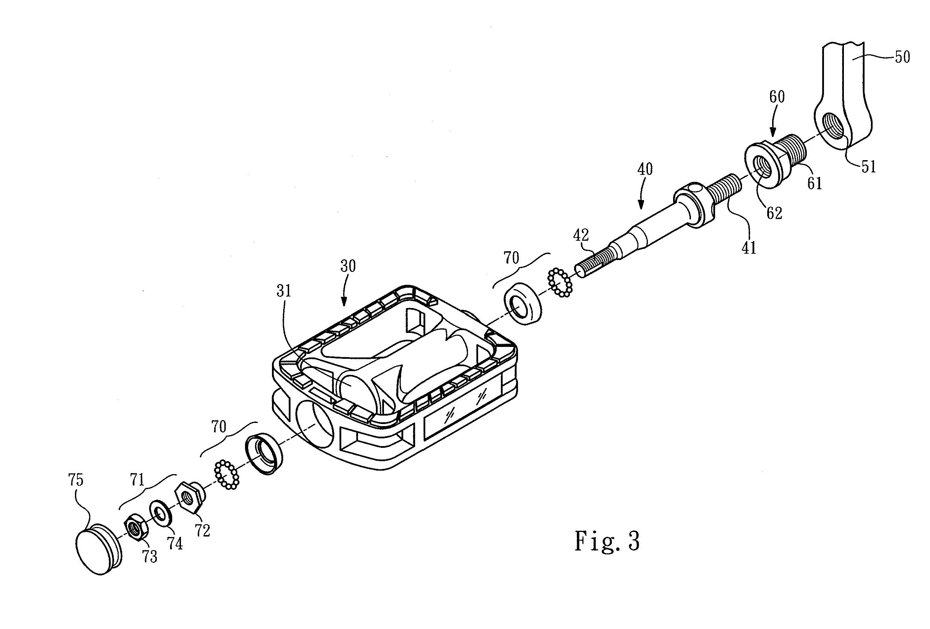

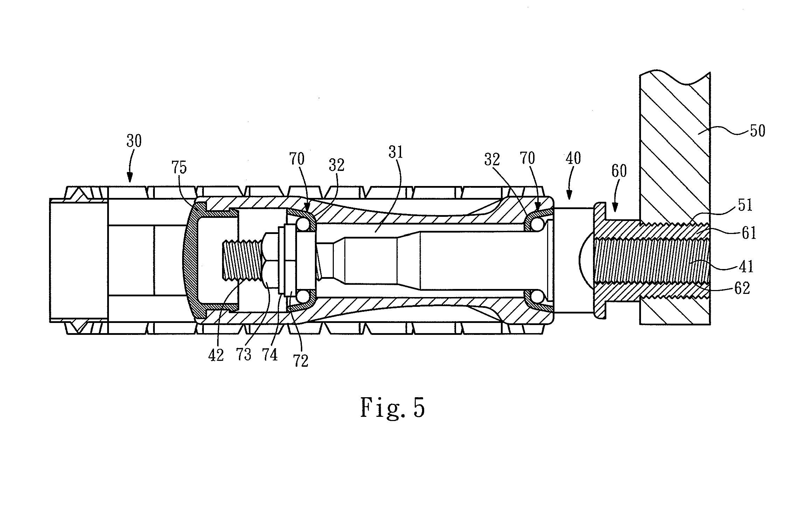

Figures **3** and **5** further illustrate the combination of the treadle shaft **40** and the treadle **30.** The treadle shaft **40** is received in a shaft hole **31** formed in the treadle **30.** Two rolling sets **70** are mounted around the treadle shaft **40** and a wall defining the shaft hole **31** is provided with two positioning elements **32** for fastening the two rolling sets **70** therein. One end of the treadle shaft **40** in the shaft hole **31** has a second threaded segment **42** coupled with a retaining set **71.** According to the present embodiment, the retaining set **71** comprises two retaining nuts **72, 73** and a gasket **74** settled therebetween. A cap **75** is arranged at an opening end of the shaft hole **31** of the treadle **30.** By the above structure, the treadle **30** and the treadle shaft **40** are combined in a manner that the treadle **30** revolves on the treadle shaft **40** freely.

While the connecting nut **60** and the treadle shaft **40** are coupled through threads, the combination of the crank **50** and the treadle **30** in structurally compact and simplified so as to simplify the assembling process of the treadle **30** and the crank **50**. Moreover, since the crank **50** and the treadle **30** are coupled in such simplified manner, it is possible for a normal bicycle user to replace the treadle by himself/herself.

Furthermore, both the combination between the threaded segment **61** of the connecting nut **60** and the threaded hole **51** of the crank **50** and the combination between the first threaded segment **41** of the treadle shaft **40** and the threaded hole **62** of the connecting nut **60** can be realized by the known right-hand or left-hand threads as long as the treadle shaft **40** is secured from leaving the connecting nut **60** and the connecting nut **60** is secured from leaving the crank **50** while the treadle is treaded by a bicycle user

Although the particular embodiment of the invention has been described in detail for purposes of illustration, it will be understood by one of ordinary skill in the art that numerous variations will be possible to the disclosed embodiment without going outside the scope of the invention as disclosed in the claims.

## Claims

1. A coupling assembly for being provided between a treadle and a crank of a bicycle, the coupling assembly comprising:
a treadle shaft, which is combined with the treadle and has one end thereof projecting form the treadle formed with a first threaded segment; and
a connecting nut, which has one end thereof formed with a threaded segment for being coupled with a threaded hole of the crank;
wherein the connecting nut has a threaded hole axially passing though two ends of the connecting nut and the first threaded segment of the treadle shaft is coupled with the threaded hole of the connecting nut.
